# DEMANDE DE BREVET EUROPEEN

(11) **EP 2 174 891 A1**
(43) Date de publication de la demande: **14.04.2010**
(21) Numéro de dépôt: 08165996.3
(22) Date de dépôt: 07.10.2008
(51) Int. Cl.: B65D 88/70

(54) **Dispositif pour la fluidification de matériaux granulaires, conteneur muni d'un tel dispositif, procédé de conditionnement de matériaux granulaires et procédé de décolmatage de matériaux granulaires contenus dans un conteneur**

(71) Demandeur: Ateliers Caucheteux SPRL, 7500 Tournai (BE)
(72) Inventeur: Caucheteux, Jean-Marie, 7500, Tournai (BE)
(74) Mandataire: Vandeberg, Marie-Paule L.G.

(57) **Abrégé**

La présente invention concerne le domaine des fluidificateurs de matériaux granulaires. Plus particulièrement, la présente invention concerne un dispositif **(1)** et une méthode appropriée pour la fluidification et le décolmatage de matériaux granulaires **(24)** contenus dans des conteneurs **(14)** tels que silos ou trémies.

## Description

### DOMAINE TECHNIQUE DE L'INVENTION

La présente invention concerne le domaine des fluidificateurs de matériaux granulaires.
Plus particulièrement, la présente invention concerne un dispositif et une méthode appropriée pour la fluidification et le décolmatage de matériaux granulaires contenus dans des conteneurs tels que silos ou trémies.

### ARRIÈRE-PLAN TECHNIQUE DE L'INVENTION

Les matériaux granulaires secs tels que la farine, les ciments, la chaux, les engrais, les graines végétales, les compositions chimiques poudreuses, entre autres, sont généralement stockés dans des conteneurs à grande capacité tels que des silos, des trémies, des réservoirs de stockage, des citernes, etc. Ceci permet de conserver ces matières solides sèches à l'abri de la lumière et souvent de l'humidité ambiante en attendant une utilisation ultérieure.

Il est bien connu dans l'art que les produits granulaires secs posent certains problèmes lorsqu'il s'agit de décharger les produits contenus hors du conteneur. Dans certains cas, les matériaux granulaires refusent de s'écouler vers la sortie du contenant due à la formation de canaux aériens dans les produits ou du fait de l'humidité qui conduit à la formation de blocs à l'intérieur du conteneur. Ceci peut conduire à des situations de blocage ou de colmatage des conteneurs correspondant. Il est dès lors nécessaire de réaliser le décolmatage du conteneur, ce qui dans certains cas peut se révéler long, complexe et coûteux.

Ce problème bien connu dans le domaine du stockage de produits granulaires a conduit au développement de divers dispositifs pour l'introduction d'air ou d'ondes vibratoires dans les matériaux granulaires à l'intérieur des réservoirs de stockage, de façon à éliminer les blocages de produits et à en faciliter le libre écoulement à travers la sortie de déchargement du conteneur concerné. De tels dispositifs sont décrits par exemple dans les brevets US 3,929,261 ; US 3,952,956 ; US 4,030,755 ; US 4,172,539 ; US 4,189,262 ; US 4,662,543 ; US 4,767,024 ; US 4,820,052 ; US 5,017,053 ; US 6,170,976 ; ou US 2006/0220266. Toutefois, les dispositifs décrits ont tous comme point commun qu'ils nécessitent qu'une partie plus ou moins grande de ces dispositifs soit disposée à l'intérieur du volume de stockage destiné à contenir les matériaux granulaires. Il en résulte qu'une partie plus ou moins importante du volume de stockage est consommé par les dispositifs d'aération au lieu d'être consacré au stockage des matériaux. Par ailleurs, il a été constaté que toute partie ou élément d'un dispositif d'aération qui se projette à l'intérieur du volume de stockage provoque de fait une résistance à l'écoulement du matériau granulaire contenu. Plus important encore, ces parties projetées créent des zones d'accrochages qui peuvent dans certains cas initier et favoriser la formation d'agrégats de matériaux qui en conséquence peuvent provoquer le colmatage du conteneur et empêcher l'écoulement des matériaux contenus. Enfin, il est apparu que certaines des solutions décrites dans l'art ne permettaient pas de conserver une efficacité d'aération/fluidification constante et élevée dans le temps. Ceci étant du en particulier à des problèmes de bouchage de filtres, de membranes ou d'orifices associés aux systèmes divulgués.

Une solution partielle à ces problèmes a été décrite par exemple dans US 4,930,230 qui divulgue un appareil pour le conditionnement de masse de matériaux, l'appareil comprenant un silo et une pluralité d'injecteurs à vapeur distribué sur le silo. Ces injecteurs étant placés de telle sorte qu'il n'y ait pas de parties projetées à l'intérieur du volume de stockage. De même, EP-A2-1 277 999 décrit un dispositif d'aération relativement complexe dont la structure, qui bien que communiquant avec l'intérieur de la chambre de stockage, ne se trouve pas à l'intérieur de celle-ci.

Sans vouloir remettre en cause les avantages apportés par les solutions décrites dans l'art antérieur, il n'en reste pas moins pas que ces solutions ne sont pas entièrement satisfaisantes du point de vue de leur efficacité. Il existe dés lors toujours un besoin pour des dispositifs de fluidification de matériaux granulaires contenus dans un conteneur qui conservent leur efficacité avec le temps et qui fournissent une efficacité de fluidification élevée, tout en impliquant un procédé de fabrication peu complexe et donc peu coûteux.

L'invention a pour but de remédier aux inconvénients mentionnés ci-dessus, en décrivant un dispositif de fluidification qui garantisse à la fois une efficacité de fluidification élevée et durable, et qui implique une méthode de fabrication relativement simple.

Avantageusement, le dispositif selon la présente invention permet non seulement de fluidifier efficacement et de façon préventive des matériaux granulaires contenus dans un conteneur en vue de limiter et/ou d'empêcher la survenance prématurée de colmatage, mais permet également de décolmater activement des conteneurs contenant des matériaux granulaires dont l'écoulement est empêché ou limité, lesquels conteneurs étant auparavant dépourvus de tels dispositifs.

### RÉSUMÉ DE L'INVENTION

Selon une première forme de réalisation, la présente invention concerne un dispositif convenant pour la fluidification de matériaux granulaires. Selon une autre forme de réalisation de la présente invention, il est décrit un conteneur apte à contenir des matériaux granulaires, le conteneur étant entre autres muni d'au moins un dispositif tel que mentionné ci-dessus. D'après encore un autre mode d'exécution de l'invention, il est décrit un procédé pour le conditionnement de matériaux granulaires, le procédé comprenant l'étape consistant à introduire les matériaux granulaires dans un conteneur tel que mentionné ci-dessus. Selon toujours un autre mode de réalisation, la présente invention concerne un procédé pour le décolmatage de matériaux granulaires contenus dans un conteneur, le procédé comprenant l'étape consistant à placer sur le conteneur au moins un dispositif tel que mentionné ci-dessus. Selon encore un autre mode de réalisation, la présente invention se rapporte à l'utilisation d'un dispositif tel que mentionné ci-dessus pour la fluidification de matériaux granulaires. Selon un autre mode de réalisation, la présente invention se rapporte à l'utilisation d'un dispositif tel que mentionné ci-dessus pour le décolmatage de matériaux granulaires contenus dans un conteneur.

### BRÈVE DESCRIPTION DES FIGURES

**FIG.1** est une représentation en coupe d'un dispositif **1** selon la présente invention placé sur un conteneur **14** lorsque le dispositif est mis sous pression.
**FIG.2** est une représentation en coupe d'un dispositif **1** selon la présente invention placé sur un conteneur **14** lorsque le dispositif n'est pas mis sous pression.
**FIG.3** est une représentation en coupe d'une bague support **2** disposée sur la paroi **16** d'un conteneur **14,** paroi **16** sur laquelle une ouverture d'introduction **22** est présente.
**FIG.4** est une représentation en perspective d'un dispositif **1** selon la présente invention lorsque la culasse **3** est en position projetée par rapport à la bague support **2.**
**FIG.5** est une représentation explosée d'un dispositif **1** selon la présente invention, dans laquelle sont représentés : une bague support **2,** une soupape **8,** des moyens d'étanchéification **13,** une culasse **3,** des moyens de compression **11,** et des moyens de stoppage **12.**
**FIG.6** est une représentation de face d'un dispositif **1** selon la présente invention représentée sans la culasse **3.**
**FIG.7** est une représentation d'un conteneur **14** sur lequel sont placés deux dispositifs **1** selon la présente invention.

### DESCRIPTION DÉTAILLÉE DE L'INVENTION

Selon une première forme de réalisation, la présente invention concerne un dispositif **1** convenant pour la fluidification de matériaux granulaires **24.**
Dans le contexte de la présente invention, on désigne par « matériaux granulaires» tout matériau, généralement solide, de type granule ou poudre qui est typiquement capable de se déverser. De manière préférée, les matériaux granulaires **24** sont des matériaux dits pulvérulents tels que les ciments, les farines, la chaux, certains engrais, les graines végétales, les compositions chimiques poudreuses, les fillers, les fillers récupérés, les sables, les granulas, etc. Il est connu dans l'art que ces matériaux sont particulièrement sujets au phénomène de colmatage lorsque ceux-ci sont placés dans des conteneurs de stockage pendant un certain temps.

Le dispositif **1** selon la présente invention est de préférence destiné à être placé sur des conteneurs **14** de stockage pour des matériaux granulaires **24.** Toutefois, la présente invention n'est pas limitée de la sorte. Le dispositif **1** selon la présente invention peut également être destiné à être placé sur des tuyaux ou des conduites d'écoulement, ou tout autre dispositif permettant le stockage et/ou le transit de matériaux granulaires, de préférence pulvérulents.

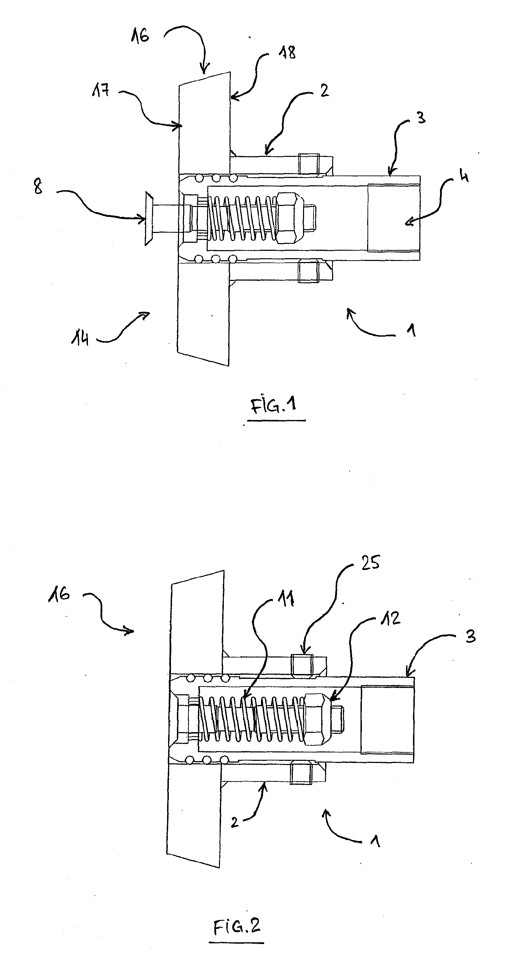

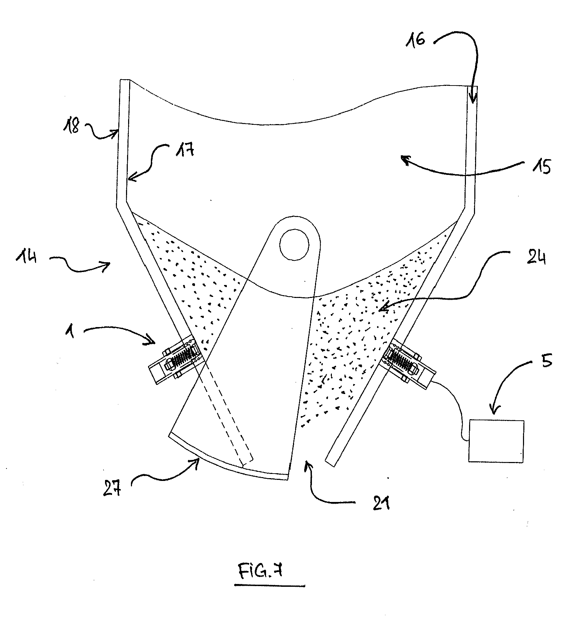

Dans une forme d'exécution préférée de la présente invention, le dispositif **1** selon la présente invention est placé sur des conteneurs **14** de stockage pour des matériaux granulaires **24.** Tout conteneur de stockage bien connu de l'homme du métier peut être utilisé dans le contexte de la présente invention. De préférence, le dispositif **1** selon la présente invention est utilisé en combinaison avec des conteneurs à grande capacité. Des exemples typiques de conteneurs **14** incluent, mais ne sont pas limités à des silos, des trémies, des réservoirs de stockage, des citernes, des containers, etc. Par ailleurs, les conteneurs **14** pour l'utilisation dans la présente invention peuvent être sédentaires ou mobiles. L'utilisation de camions-citernes ou tout autre moyen de stockage automobile est tout à fait envisageable dans le contexte de la présente invention. Typiquement, le conteneur **14** comprend un réceptacle **15** définissant un volume intérieur et une paroi **16** comprenant une face interne **17** et une face externe **18** (comme représenté dans **FIG.1** et **FIG.7****).**

Selon une première forme de réalisation, la présente invention concerne un dispositif **1** convenant pour la fluidification de matériaux granulaires **24,** comprenant :
(a) une bague support **2** ;
(b) une culasse **3** apte à coulisser dans ladite bague support **2** ; ladite culasse **3** comprenant à l'une de ses extrémités une ouverture principale **4** connectable avec des moyens de mise sous pression **5,** et à l'extrémité opposée une ouverture secondaire **6** et des ouvertures d'injection **7 ;**
(c) une soupape **8** comprenant une tête **9** et une tige **10,** ladite tige **10** de soupape étant apte à coulisser dans ladite ouverture secondaire **6 ;**
(d) des moyens de compression **11** associant ladite soupape **8** et ladite culasse **3 ;**
tels que lorsque ledit dispositif **1** n'est pas mis sous pression par l'intermédiaire desdits moyens de mise sous pression **5,** ladite tête de soupape **9** obture lesdites ouvertures d'injection **7** par l'intermédiaire desdits moyens de compression **11** ; et lorsque ledit dispositif **1** est mis sous pression par l'intermédiaire desdits moyens de mise sous pression **5,** ladite tige **10** de soupape coulisse dans ladite ouverture secondaire **6** de façon à ce que ladite tête de soupape **9** n'obture plus lesdites ouvertures d'injection **7.**

Cette première forme de réalisation sera mieux comprise au vu des figures attachées. En se référant maintenant à la **FIG.1****,** qui est une représentation en coupe d'un dispositif **1** selon la présente invention placé sur un conteneur **14** lorsque le dispositif **1** est mis sous pression, il est apparent que le dispositif **1** comprend comme élément constitutif une bague support 2 associée à une culasse **3.** La culasse **3** ainsi que la bague support **2** peuvent revêtir n'importe quelles formes bien connues de l'homme du métier à la condition toutefois que ladite culasse **3** soit apte à coulisser dans ladite bague support **2.** Dans une forme d'exécution préférée de l'invention, la bague support **2** peut prendre la forme d'un cylindre creux ouvert à ses deux extrémités de façon symétrique. La bague support **2** définie par ailleurs un volume intérieur **23.** Selon cette forme d'exécution préférée, la culasse **3** prend, de préférence, la forme également d'un cylindre creux ouvert à ses deux extrémités de façon asymétrique. Les formes et dimensions de ladite bague support **2** et de la culasse **3** sont choisies de façon complémentaire de manière à permettre à la culasse **3** de coulisser dans la bague support **2.** Ces formes et ces dimensions seront aisément identifiées par l'homme du métier.

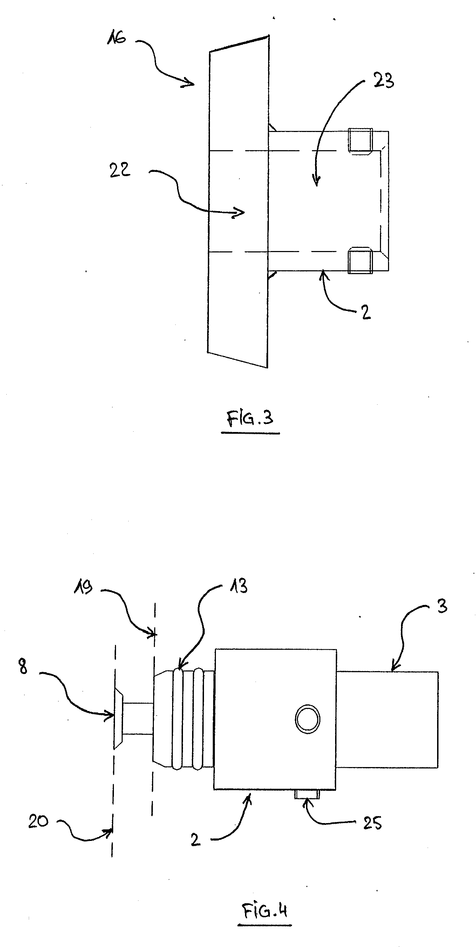

Dans le but d'assurer un coulissement étanche entre la bague support **2** et la culasse **3,** ladite culasse **3** est avantageusement pourvue de moyens d'étanchéification **13,** bien connus de l'homme du métier. De façon préférée, lesdits moyens d'étanchéification **13** peuvent prendre la forme d'un ou plusieurs joints toriques placés sur la face externe de la culasse **3,** comme représenté sur la **FIG.4****.** Dans une forme préférée d'exécution, la bague support **2** peut en outre être pourvue de moyens de réglage **25** du coulissement de ladite culasse **3** dans ladite bague support **2.** Ces moyens de réglage **25** permettent d'assurer un coulissement parfaitement contrôlé de ladite culasse **3** dans ladite bague support **2,** ce qui permet de contrôler de façon optimum l'introduction de la culasse **3** dans l'ouverture d'introduction **22** pratiquée dans la paroi **16** du conteneur **14,** comme décrit ci-après (voir **FIG.3****).** Préférentiellement, les moyens de réglage **25** prennent la forme d'une ou plusieurs vis de réglages traversant la paroi de la bague support **2** et venant au contact de la culasse **3** de façon à créer une friction mécanique appropriée, comme représenté sur la **FIG.4****.**

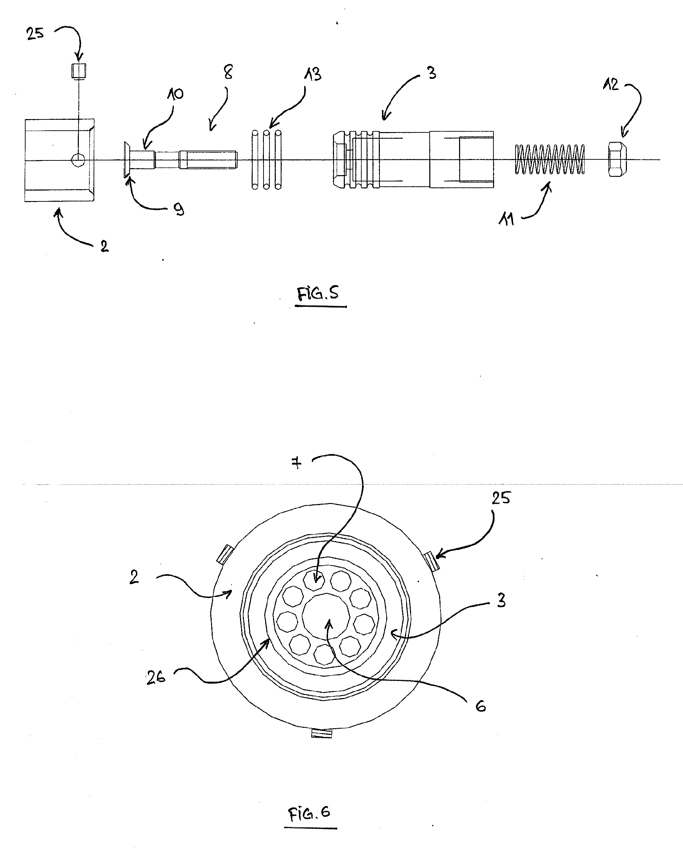

La culasse **3** est en outre pourvue d'une ouverture principale **4** à une de ses extrémités, et à l'autre extrémité d'une ouverture secondaire **6** et d'ouvertures d'injections **7** (voir **FIG.6****).** L'ouverture secondaire **6** est destinée à recevoir la soupape **8,** comme décrit ci-après. Les ouvertures d'injections **7** sont elles destinées à permettre la projection de gaz ou de liquide sous pression fournis par des moyens de mise sous pression **5.** Selon une forme préférée d'exécution de la présente invention, les ouvertures d'injections **7** prennent la forme d'une ou plusieurs perforations circulaires placées avantageusement autour de ladite ouverture secondaire **6.** Toutefois, la présente invention n'est pas limitée de la sorte. Concernant les moyens de mise sous pression **5** (voir **FIG.7****),** ceux-ci seront aisément identifiables par l'homme du métier. Ils ne seront de ce fait pas détaillés d'avantage.

Comme représenté dans la **FIG.5****,** le dispositif **1** selon la présente invention comprend en outre une soupape **8** comprenant une tête **9** et une tige **10.** La soupape **8** peut revêtir n'importe quelles formes bien connues de l'homme du métier à la condition toutefois que ladite soupape **8** soit apte à coulisser dans ladite ouverture secondaire **6** de la culasse **3.** Les formes et dimensions de ladite soupape **8** et de ladite ouverture secondaire **6** sont choisies de façon complémentaire de manière à permettre à la soupape **8** de coulisser dans l'ouverture secondaire **6.** Ces formes et ces dimensions seront aisément identifiées par l'homme du métier. De façon préférée, l'ouverture secondaire **6** prend la forme d'une ouverture circulaire (comme représenté dans la **FIG.6****).**

Préférentiellement, ladite tige **10** de soupape prend la forme d'un cylindre allongé, alors que ladite tête **9** de soupape prend de préférence la forme d'un disque circulaire profilé comme indiqué dans la **FIG.5****.**

Selon une forme préférée de réalisation, la culasse **3** est en outre pourvue d'un logement **26** qui est dimensionné et formé de telle sorte qu'il permette à la tête **9** de soupape de s'y intégrer de façon optimum (voir **FIG.2** en combinaison avec **FIG.6****).** Selon une forme préférée, ladite tête **9** de soupape peut s'imbriquer dans ledit logement **26** de telle sorte que ladite tête **9** de soupape ne s'étende pas hors du plan **19** formé par l'extrémité de la culasse **3** contenant l'ouverture secondaire **6,** lorsque le dispositif **1** n'est pas mis sous pression par l'intermédiaire des moyens de mise sous pression **5.** Selon une forme encore plus préférée d'exécution, ladite soupape **8** est configurée de telle sorte que le plan **20** formé par ladite tête **9** de soupape est sensiblement adjacent au plan **19** formé par l'extrémité de ladite culasse **3** contenant ladite ouverture secondaire **6,** lorsque le dispositif **1** n'est pas mis sous pression par l'intermédiaire des moyens de mise sous pression **5** (voir **FIG.2** en combinaison avec **FIG.4****).**

Toujours selon une forme préférée de réalisation et comme représenté dans la **FIG.6****,** ladite ouverture secondaire **6** et lesdites ouvertures d'injections **7** sont avantageusement placés dans ledit logement **26,** de telle sorte que ladite tête **9** de soupape soit apte à obturer efficacement lesdites ouvertures d'injection **7** lorsque celle-ci est logée dans le logement **26.**

Le dispositif **1** selon la présente invention comprend en outre des moyens de compression **11** associant ladite soupape **8** et ladite culasse **3.** Ces moyens de compression **11** sont aptes à maintenir une force de compression entre ladite soupape **8** et ladite culasse **3,** telle que lorsque le dispositif **1** n'est pas mis sous pression par l'intermédiaire des moyens de mise sous pression **5,** la tête **9** de soupape est apte à obturer efficacement lesdites ouvertures d'injection **7.** Des moyens de compression **11** utilisables dans la présente invention seront aisément identifiés par l'homme du métier.

Comme représenté dans la **FIG.2****,** et selon une exécution préférée, les moyens de compression **11** prennent la forme d'un ressort associé à des moyens de stoppage **12** bien connus de l'homme du métier. Un moyen de stoppage **12** préféré est représenté par un écrou. Selon cette forme préférée de réalisation, ledit ressort est idéalement placé autour de ladite tige **10** de soupape, et un écrou est idéalement placé à l'extrémité de ladite tige **10** de soupape. Ledit écrou est de préférence vissé autour d'un filetage placé à l'extrémité de ladite tige **10** de soupape. Selon un mode de fonctionnement normal du dispositif **1,** et lorsque le celui-ci n'est pas mis sous pression par l'intermédiaire des moyens de mise sous pression **5,** le ressort est partiellement comprimé entre le moyen de stoppage **12** et la culasse **3** de façon à rendre la tête **9** de soupape apte à obturer efficacement lesdites ouvertures d'injection **7**. Lorsque le dispositif **1** est mis sous pression par l'intermédiaire des moyens de mise sous pression **5,** le fluide sous pression arrivant par l'intermédiaire de l'ouverture principale **4** de ladite culasse **3** s'introduit par l'intermédiaire des ouvertures d'injection **7** en repoussant la tête **9** de soupape. Cette force de pression exercée sur la tête **9** de soupape provoque le coulissement de la tige **10** de soupape dans ladite ouverture secondaire **6** comprimant davantage le ressort et désobturant lesdites ouvertures d'injection **7** (comme représenté dans **FIG.1****).** Lorsque les moyens de mise sous pression **5** sont désactivés, le ressort se décomprime en provoquant le coulissement de la tige **10** de soupape dans le sens opposé et en ramenant la tête **9** de soupape de sorte que celle-ci obture à nouveau lesdites ouvertures d'injection **7** (comme représenté dans **FIG.2****).**

Lorsque le dispositif **1** est mis sous pression, lesdites ouvertures d'injection **7** sont désobturées et le fluide comprimé est ainsi libéré à travers celles-ci. Lorsque le dispositif **1** est placé sur des conteneurs **14** de stockage pour des matériaux granulaires, le fluide comprimé est ainsi libéré à l'intérieur du volume du conteneur **14** à travers le matériau granulaire **24.**

Les fluides utilisables dans la présente invention seront aisément identifiés par l'homme du métier. Des exemples typiques de fluides comprennent, mais ne sont pas limités à, des gaz et des liquides plus ou moins visqueux. Dans une forme préférée de réalisation, le fluide est un gaz. Dans une forme encore plus préférée, le fluide est de l'air.

Dans une forme alternative de réalisation, la soupape **8** est configurée de telle sorte que celle-ci puisse vibrer sous l'action du fluide comprimé. Selon une forme d'exécution préférée, ceci est réalisé en adaptant les formes et dimensions de l'ouverture secondaire **6** d'une part, et de la tige **10** de soupape d'autre part, de façon à ce que ladite tige **10** de soupape puisse coulisser plus que librement dans ladite ouverture secondaire **6.** De façon préférée, le diamètre de la tige **10** de soupape sera inférieur au diamètre de l'ouverture secondaire **6.** Il sera tout à fait dans les aptitudes de l'homme du métier de configurer la soupape **8** de telle sorte que celle-ci puisse vibrer sous l'action du fluide comprimé.

Il a été découvert de façon surprenante que l'action vibratoire de la soupape **8** combinée à l'injection de fluide sous pression contribue à améliorer grandement l'action fluidifiante du dispositif **1** tel que l'invention. Il est postulé que la vibration de la soupape **8** contribue à créer une vibration pneumatique qui se propage à travers les matériaux granulaires **24** et qui favorise leur mise en mouvement.

Les différents éléments constitutifs du dispositif **1** tel que revendiqué peuvent être réalisés en tout matériaux bien connus dans le domaine de la mécanique industrielle. Ces matériaux incluent de manière non limitative les matériaux plastiques, le métal, les céramiques, les aciers inoxydables, les aciers réfractaires, les aciers trempés, les aciers revêtus, etc. Dans une forme préférée de réalisation, les éléments constitutifs du dispositif **1** selon l'invention sont réalisés en métal, de façon préférée en acier inoxydable.

Dans le contexte de la présente invention, il a été découvert de manière surprenante que le dispositif suivant l'invention permet non seulement de fluidifier efficacement des matériaux granulaires contenus dans un conteneur **14** de stockage, de manière à éviter les phénomènes de colmatage et les problèmes d'écoulement de matériaux (action préventive), mais permet également de décolmater efficacement des conteneurs **14** dont la vidange est empêchée ou freinée (action curative). Cette double action est rendue possible grâce aux différents éléments constitutifs du dispositif **1** selon l'invention, et à leur agencement particulier au sein du dispositif **1.**

De façon non moins surprenante, il a été découvert que le dispositif **1** non seulement fournit une efficacité de fluidification élevée, mais conserve cette efficacité avec le temps. En effet, le dispositif **1** selon l'invention n'est pas victime de phénomènes de contamination ou de colmatage qui pourraient réduire ou même stopper l'action fluidifiante du dispositif **1.** En particulier, il a été constaté que les ouvertures d'injection **7** sont à tout moment protégées contre l'intrusion de matériaux granulaires **24.** Lorsque le dispositif **1** n'est pas mis sous pression, la tête **9** de soupape obture efficacement lesdites ouvertures d'injection **7** sous l'action des moyens de compression **11.** Lorsque le dispositif **1** est mis sous pression cette fois, les ouvertures d'injection **7** sont désobturées et le fluide comprimé s'échappe à travers celles-ci de façon explosive rendant impossible l'intrusion de matériaux granulaires **24** dans les ouvertures d'injection **7.** A mesure que la pression à laquelle est soumis le dispositif **1** diminue, la tête **9** de soupape se rapproche localement des ouvertures d'injection **7** de manière à progressivement les obturer à nouveau. Le jet de fluide comprimé se charge lui de repousser les matériaux granulaires **24** loin des ouvertures d'injection **7.**

Selon une autre forme de réalisation, la présente invention concerne un conteneur **14** apte à contenir des matériaux granulaires **24** comprenant un réceptacle **15** et une paroi **16,** ladite paroi **16** comprenant une face interne **17** et une face externe **18,** dans laquelle ladite face interne **17** représente la paroi en contact avec lesdits matériaux granulaires **24,** ledit conteneur **14** étant en outre muni d'au moins un dispositif **1** comme décrit précédemment disposé sur la paroi **16** dudit conteneur **14.** De façon préférée, le conteneur **14** comprend plusieurs dispositifs **1** disposés sur la paroi **16** dudit conteneur **14** (comme représenté dans **FIG.7****).**

D'après la forme d'exécution préférée selon laquelle le conteneur **14** est en outre muni d'une ouverture de délestage **21,** ledit au moins un dispositif **1** est de préférence placé à proximité de ladite ouverture de délestage **21** (comme représenté dans **FIG.7****).** Il est postulé qu'un dispositif **1** placé à proximité de ladite ouverture de délestage **21** favorise une meilleure fluidification et donc une vidange plus efficace des matériaux granulaires contenus dans le conteneur **14.** Comme bien connu dans le domaine technique, le conteneur **14** peut en outre être muni de moyens d'ouverture/fermeture **27** de ladite ouverture de délestage **21.** Comme représenté dans **FIG.7****,** les moyens d'ouverture/fermeture **27** peuvent avantageusement prendre la forme d'un casque d'ouverture pivotant autour d'un axe fixe. Toutefois, d'autres formes de réalisation de ces moyens d'ouverture/fermeture **27,** facilement identifiables par l'homme du métier, sont également utilisables dans le contexte de la présente invention.

Selon encore une autre forme de réalisation préférée, le dispositif **1** est placé de manière à ce que le plan **19** formé par l'extrémité de ladite culasse **3** contenant ladite ouverture secondaire **6** est sensiblement adjacent au plan formé par ladite face interne **17** de ladite paroi **16** (voir **FIG.2** en combinaison avec **FIG.7****).** Il a été constaté que d'après cette forme préférée de réalisation, le dispositif **1** ne créé pas de zone d'accrochage qui pourrait dans certains cas initier et favoriser la formation d'agrégats de matériaux et qui en conséquence pourrait provoquer le colmatage du conteneur **14** et empêcher l'écoulement libre des matériaux granulaires **24** contenus. Il est postulé que l'absence de zone d'accrochage combiné à l'injection de fluide sous pression contribue grandement à garantir une efficacité de fluidification élevée à l'intérieur du conteneur **14.** Selon encore un autre forme de réalisation préférée, le plan **20** formé par ladite tête **9** de soupape est sensiblement adjacent au plan **19** formé par l'extrémité de ladite culasse **3** contenant ladite ouverture secondaire **6.** Ceci garantie à nouveau l'absence de zone d'accrochage à l'intérieur du conteneur **14,** mais contribue également à former une surface de contact homogène et lisse entre le dispositif **1** et les matériaux granulaires **24** contenus dans le conteneur **14.**

D'après un mode de fonctionnement normal du dispositif **1** placé sur la paroi **16** du conteneur **14,** lorsque le dispositif **1** est mis sous pression par l'intermédiaire desdits moyens de mise sous pression **5,** ladite soupape **8** coulisse dans ladite ouverture secondaire **6** de façon à projeter ladite tête **9** de soupape hors du plan **19** formé par l'extrémité de ladite culasse **3** à l'intérieur du réceptacle **15** dudit conteneur **14.** Il est postulé que cette configuration particulière de la tête **9** de soupape se projetant à l'intérieur du réceptacle **15** garantie une injection de fluide sous pression au coeur du matériau granulaire **24** contenu, favorisant ainsi une fluidification élevée et/ou un décolmatage efficace. Selon une autre forme de réalisation de la présente invention, il est décrit un procédé pour le conditionnement de matériaux granulaires **24,** ledit procédé comprenant l'étape consistant à introduire lesdits matériaux granulaires **24** dans un conteneur **14** comme décrit précédemment. Il a été découvert que lorsque des matériaux granulaires **24** sont conditionnés de la sorte, lesdits matériaux granulaires **24** bénéficient non seulement d'une fluidification élevée empêchant préventivement le colmatage du conteneur **14,** mais peuvent également être soumis à une action efficace de décolmatage lorsque des agrégats se sont formés au sein desdits matériaux granulaires **24**

Selon encore une autre forme de réalisation, la présente invention est dirigée vers un procédé pour le décolmatage de matériaux granulaires **24** contenus dans un conteneur **14** comprenant un réceptacle **15** et une paroi **16,** ladite paroi **16** comprenant une face interne **17** et une face externe **18,** ledit procédé comprenant l'étape consistant à placer au moins un dispositif **1** comme décrit précédemment sur ledit conteneur **14,** ledit dispositif **1** étant placé sur ledit conteneur **14** selon une méthode comprenant les étapes consistant à :
- fixer ladite bague support **2** sur la face externe **18** de ladite paroi **16** ;
- percer une ouverture d'introduction **22** à travers ladite paroi **16** et dans le prolongement de ladite bague support **2** de façon à permettre une communication entre le volume intérieur **23** de la bague support **2** et l'intérieur du réceptacle **15** du conteneur **14** ;
- introduire à travers le volume intérieur **23** de la bague support **2** et ladite ouverture d'introduction **22,** l'assemblage comprenant ladite culasse **3** associée à ladite soupape **8** et lesdits de moyens de compression **11,** de manière à ce que le plan **19** formé par l'extrémité de ladite culasse **3** contenant ladite ouverture secondaire **6** soit sensiblement adjacent au plan formé par ladite face interne **17** de ladite paroi **16.**

Le procédé selon la présente invention permet d'intervenir sur des conteneurs **14** déjà sujets à des phénomènes de colmatage de l'ouverture de délestage **21** ou sur des conteneurs **14** dans lesquels les matériaux granulaires **24** contenus se sont agrégés au point de ralentir ou d'empêcher leur écoulement hors du conteneur **14.**

Selon toujours une autre forme de réalisation, la présente invention concerne l'utilisation d'un dispositif **1** comme décrit précédemment pour la fluidification de matériaux granulaires **24.** Dans le contexte de la présente invention, on désigne par fluidification de matériaux granulaires **24** non seulement l'opération consistant à aérer des matériaux granulaires **24** de façon à empêcher préventivement toute forme de colmatage, mais aussi l'opération consistant à favoriser l'écoulement, le transit ou le convoyage de matériaux granulaires **24.** Le dispositif **1** selon l'invention pourra notamment être utilisé pour l'évacuation ou le transport de matériaux granulaires **24** à travers par exemple des tuyaux, des conduites d'écoulement, des gaines d'évacuation, des descentes tubulaires, des tapis ou des plateformes de convoyage, ou tout autre dispositif permettant le transit de matériaux granulaires **24,** de préférence pulvérulents.

Selon encore une autre forme de réalisation, la présente invention concerne l'utilisation d'un dispositif 1 comme décrit précédemment pour le décolmatage de matériaux granulaires **24** contenus dans un conteneur **14.** Dans le contexte de la présente invention, on désigne par conteneur 14 tout réservoir convenant pour le stockage de matériaux granulaires **24.**

## Revendications

1. Dispositif **(1)** convenant pour la fluidification de matériaux granulaires **(24),** comprenant :
(a) une bague support **(2)** ;
(b) une culasse **(3)** apte à coulisser dans ladite bague support **(2)** ; ladite culasse **(3)** comprenant à l'une de ses extrémités une ouverture principale **(4)** connectable avec des moyens de mise sous pression **(5),** et à l'extrémité opposée une ouverture secondaire **(6)** et des ouvertures d'injection **(7)** ;
(c) une soupape **(8)** comprenant une tête **(9)** et une tige **(10),** ladite tige **(10)** de soupape étant apte à coulisser dans ladite ouverture secondaire **(6)** ;
(d) des moyens de compression **(11)** associant ladite soupape **(8)** et ladite culasse **(3)** ;
tels que lorsque ledit dispositif **(1)** n'est pas mis sous pression par l'intermédiaire desdits moyens de mise sous pression **(5),** ladite tête de soupape **(9)** obture lesdites ouvertures d'injection **(7)** par l'intermédiaire desdits moyens de compression **(11)** ; et lorsque ledit dispositif **(1)** est mis sous pression par l'intermédiaire desdits moyens de mise sous pression **(5),** ladite tige **(10)** de soupape coulisse dans ladite ouverture secondaire **(6)** de façon à ce que ladite tête de soupape **(9)** n'obture plus lesdites ouvertures d'injection **(7).**

2. Dispositif **(1)** selon la revendication 1, **caractérisé en ce que** lesdits moyens de compression **(11)** sont représentés par un ressort associé à un moyen de stoppage **(12).**

3. Dispositif **(1)** selon l'une quelconque des revendications 1 ou 2, **caractérisé en ce que** ladite culasse **(3)** est en outre munie de moyens d'étanchéification **(13).**

4. Dispositif **(1)** selon l'une quelconque des revendications précédentes, **caractérisé en ce que** ladite bague support **(2)** est en outre munie de moyens de réglage **(25)** du coulissement de ladite culasse **(3)** dans ladite bague support **(2).**

5. Dispositif **(1)** selon l'une quelconque des revendications précédentes, **caractérisé en ce que** ladite soupape (8) est apte à vibrer lorsque ledit dispositif **(1)** est mis sous pression par l'intermédiaire desdits moyens de mise sous pression **(5).**

6. Conteneur **(14)** apte à contenir des matériaux granulaires **(24)** comprenant un réceptacle **(15)** et une paroi **(16),** ladite paroi **(16)** comprenant une face interne **(17)** et une face externe **(18),** dans laquelle ladite face interne **(17)** représente la paroi en contact avec lesdits matériaux granulaires **(24),** ledit conteneur **(14)** étant en outre muni d'au moins un dispositif **(1)** selon l'une quelconque des revendications précédentes disposé sur la paroi **(16)** dudit conteneur **(14).**

7. Conteneur (14) selon la revendication 6, **caractérisé en ce que** ledit dispositif **(1)** est placé de manière à ce que le plan **(19)** formé par l'extrémité de ladite culasse **(3)** et contenant ladite ouverture secondaire **(6)** est sensiblement adjacent au plan formé par ladite face interne **(17)** de ladite paroi **(16).**

8. Conteneur **(14)** selon l'une quelconque des revendications 6 ou 7, **caractérisé en ce que** le plan **(20)** formé par ladite tête **(9)** de soupape est sensiblement adjacent au plan **(19)** formé par l'extrémité de ladite culasse **(3)** contenant ladite ouverture secondaire **(6).**

9. Conteneur **(14)** selon l'une quelconque des revendications 6 à 8, **caractérisé en ce que** lorsque ledit dispositif **(1)** est mis sous pression par l'intermédiaire desdits moyens de mise sous pression **(5),** ladite soupape **(8)** coulisse dans ladite ouverture secondaire **(6)** de façon à projeter ladite tête **(9)** de soupape hors du plan **(19)** formé par l'extrémité de ladite culasse **(3)** à l'intérieur du réceptacle **(15)** dudit conteneur **(14).**

10. Conteneur **(14)** selon l'une quelconque des revendications 6 à 9, muni en outre d'une ouverture de délestage **(21) caractérisé en ce que** ledit au moins un dispositif **(1)** est placé à proximité de ladite ouverture de délestage (**21**) .

11. Procédé pour le conditionnement de matériaux granulaires **(24),** comprenant l'étape consistant à introduire lesdits matériaux granulaires **(24)** dans un conteneur **(14)** selon l'une quelconque des revendications 6 à 10.

12. Procédé pour le décolmatage de matériaux granulaires **(24)** contenus dans un conteneur **(14)** comprenant un réceptacle **(15)** et une paroi **(16),** ladite paroi **(16)** comprenant une face interne **(17)** et une face externe **(18),** ledit procédé comprenant l'étape consistant à placer au moins un dispositif **(1)** selon l'une quelconque des revendications 1 à 5 sur ledit conteneur **(14),** ledit dispositif **(1)** étant placé sur ledit conteneur **(14)** selon une méthode comprenant les étapes consistant à:
• fixer ladite bague support **(2)** sur la face externe **(18)** de ladite paroi **(16)** ;
• percer une ouverture d'introduction **(22)** à travers ladite paroi **(16)** et dans le prolongement de ladite bague support **(2)** de façon à permettre une communication entre le volume intérieur **(23)** de la bague support **(2)** et l'intérieur du réceptacle **(15)** du conteneur **(14)** ;
• introduire à travers l'intérieur **(23)** de la bague support **(2)** et ladite ouverture d'introduction **(22),** l'assemblage comprenant ladite culasse **(3)** associée à ladite soupape **(8)** et lesdits de moyens de compression **(11),** de manière à ce que le plan **(19)** formé par l'extrémité de ladite culasse **(3)** contenant ladite ouverture secondaire **(6)** soit sensiblement adjacent au plan formé par ladite face interne **(17)** de ladite paroi **(16).**

13. Utilisation d'un dispositif **(1)** selon l'une quelconque des revendications 1 à 5 pour la fluidification de matériaux granulaires **(24).**

14. Utilisation d'un dispositif **(1)** selon l'une quelconque des revendications 1 à 5 pour le décolmatage de matériaux granulaires **(24)** contenus dans un conteneur **(14).**
